# EUROPÄISCHE PATENTSCHRIFT

(11) **EP 3 682 127 B1**
(45) Veröffentlichungstag und Bekanntmachung des Hinweises auf die Patenterteilung: **01.11.2023**
(21) Anmeldenummer: 18770003.4
(22) Anmeldetag: 14.09.2018
(51) Int. Cl.: F16B 21/08, B60Q 1/26, F16B 5/06

(54) **ANORDNUNG MIT BEFESTIGUNGSELEMENT ZUM LÖSBAREN VERBINDEN VON ZWEI BAUELEMENTEN**
ASSEMBLY WITH FASTENING ELEMENT FOR DETACHABLY CONNECTING TWO COMPONENTS
ENSEMBLE AVEC ÉLÉMENT DE FIXATION POUR L'ASSEMBLAGE SÉPARABLE DE DEUX ÉLÉMENTS DE CONSTRUCTION

(30) Priorität: 15.09.2017 DE 102017121449
(43) Veröffentlichungstag der Anmeldung: 22.07.2020
(73) Patentinhaber: Volkswagen AG, 38440 Wolfsburg (DE); Böllhoff Verbindungstechnik GmbH, 33649 Bielefeld (DE)
(72) Erfinder: NIEDENFÜHR, Sven, 38479 Tappenbeck (DE); KAHRE, Michael, 32052 Herford (DE); HANZEL, Michal, 38448 Wolfsburg (DE); MATTHES, Jörg, 32051 Herford (DE)
(74) Vertreter: Gulde & Partner
(86) Internationale Anmeldenummer: PCT/EP2018/074879
(87) Internationale Veröffentlichungsnummer: WO 2019/053189

(56) Entgegenhaltungen:
- US-A1- 2016 288 733
- US-A1- 2017 105 296

## Beschreibung

Die Erfindung betrifft eine Anordnung zum lösbaren Verbinden von zwei Bauelementen mit den im Oberbegriff des Anspruchs 1 genannten Merkmalen.

Aus DE 10 2004 030 583 A1 ist hierzu beispielsweise eine zweiteilige Schiebebeziehungsweise Gleithalterung bekannt.

US 6,406,242 B1 offenbart ebenfalls ein Verbindungselement, bei der ein zusätzlicher Feststeller vorgesehen ist.

Aus der US 2016/288733 A1 ist eine Struktur bekannt, in der eine Cliphaltekomponente eines Kabelbaumschutzes beschrieben ist, wobei ein Clip mit der Cliphaltekomponente zusammenpasst.

Der Erfindung liegt die Aufgabe zugrunde, eine Anordnung zu schaffen, mittels der eine sichere und lösbare Fixierung von zwei Bauelementen zueinander möglich ist.

Ausgangspunkt der Erfindung ist die Anordnung eines Befestigungselementes zum lösbaren Verbinden von zwei Bauelementen, welches einen Grundkörper umfasst, der zumindest ein Rastelement zum Verbinden mit einem ersten Bauelement aufweist, wobei das Rastelement in eine korrespondierende Öffnung des ersten Bauelementes in einer ersten Montagerichtung einbringbar ist, wobei der Grundkörper an seiner dem Rastelement gegenüberliegenden Seite eine Aufnahme für zumindest einen Abschnitt eines zweiten Bauelementes aufweist, wobei die Aufnahme und der Abschnitt korrespondierende Formmerkmale aufweisen, die eine Führung des zweiten Bauelementes in der ersten Montagerichtung, in einer zweiten Montagerichtung und einer dritten Montagerichtung übernehmen und die Aufnahme und das zweite Bauelement korrespondierende Rastmittel aufweisen, die einer lösbaren Fixierung des zweiten Bauelementes in der zweiten Montagerichtung dienen, wobei die Aufnahme einen Einschubbereich für den Abschnitt des zweiten Bauelementes in der Montagerichtung ausbildet.

Erfindungsgemäß ist vorgesehen, dass auf der dem Einschubbereich zugewandten Seite des Grundkörpers eine Auflagefläche ausgebildet ist, die über eine Rampe in eine vordere Abschlusskante des Grundkörpers übergeht, wobei die Rampe und die Auflagefläche im Bereich eines Spaltes angeordnet sind, der durch Rückwände und obere Abschlusswände des Befestigungselements zur Aufnahme eines Führungsbereiches des Abschnittes des zweiten Bauelementes gebildet ist, wobei eine Stufe eines Vorsprunges des zweiten Bauelementes im Zusammenwirken des Abschnittes des zweiten Bauelementes mit der Aufnahme des Befestigungselementes eine Stufe der Auflagefläche des Grundkörpers hinterrastet und eine Anschlagfläche eines Arretierungsbereiches des Abschnittes an Anschlagflächen der Aufnahme anschlägt.

Bevorzugt ist vorgesehen, dass der Einschubbereich von seitlichen Begrenzungswänden, Rückwänden und oberen Abschlusswänden gebildet ist. Hierdurch wird vorteilhaft möglich, den Abschnitt des zweiten Bauelementes in Bezug auf das Befestigungselement genau und reproduzierbar zu führen.

Bevorzugt ist vorgesehen, dass ein Abstand zwischen der Auflagefläche und den Anlageflächen des Einschubbereiches kleiner als eine Höhe des Arretierungsbereiches und somit des Abstandes der Anlageflächen des Arretierungsbereiches. Hierdurch wird eine spielfreie Führung des Abschnittes des zweiten Bauelementes in dem Einschubbereich sichergestellt.

Bevorzugt ist vorgesehen, dass ein Abstand zwischen der Auflagefläche und den Anlageflächen kleiner ist als eine Höhe des Arretierungsbereiches. Der Arretierungsbereich weist an seiner der Auflagefläche zugeordneten Anlagefläche einen Vorsprung auf, der über die Stufe des Vorsprungs in die Anlagefläche übergeht.

Die Stufen verlaufen unter einem Winkel zur ersten Montagerichtung. Hierdurch wird vorteilhaft möglich, mittels der korrespondierenden Stufen, einerseits an dem Befestigungselement und andererseits an dem Abschnitt des zweiten Bauelementes eine definierte positionsgenaue Verrastung in der zweiten Montagerichtung zu erreichen. Es ist weiter vorteilhaft möglich, über die Wahl des Winkels eine Haltekraft zu definieren, mittels der das zweite Bauelement in dem Befestigungselement lösbar fixiert ist.

Bevorzugt ist vorgesehen, dass das zweite Bauelement eine Fahrzeugleuchte und das erste Bauelement ein Karosserieabschnitt einer Fahrzeugkarosserie ist. Mit der erfindungsgemäßen Anordnung kann eine definierte und genaue und reproduzierbare Positionierung einer Fahrzeugleuchte an der Fahrzeugkarosserie erfolgen.

Die Erfindung wird nachfolgend in einem Ausführungsbeispiel anhand der zugehörigen Zeichnungen näher erläutert. Es zeigen:
- Figur 1: eine Explosionsdarstellung einer Verbindungsstelle zwischen zwei Bauelementen;
- Figuren 2 bis 4: verschiedene Perspektivansichten eines Befestigungselementes;
- Figur 5: eine Perspektivansicht eines Abschnitts des zweiten Bauelementes;
- Figur 6: eine Schnittdarstellung durch mit dem Befestigungselement verbundene Bauelemente;
- Figur 7: eine Darstellung zur Montage- und Demontagemöglichkeit der Verbindung; und
- Figur 8: eine schematische Seitenansicht eines Fahrzeuges.

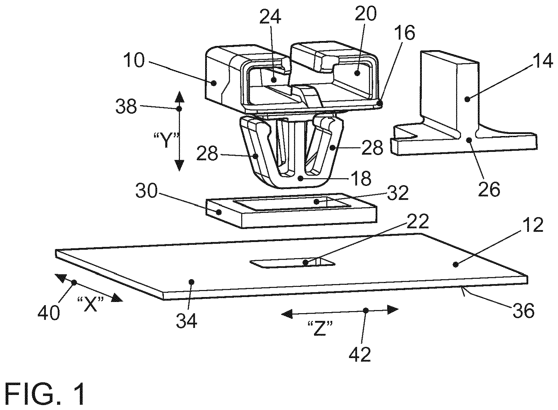

Figur 1 zeigt eine Anordnung eines Befestigungselementes 10, das dem lösbaren Verbinden von einem ersten Bauelement 12 mit einem zweiten Bauelement 14 dient. Das Befestigungselement 10 besitzt hierzu einen Grundkörper 16, an dessen einen Seite ein Rastelement 18 ausgebildet ist. An der dem Rastelement 18 abgewandten Seite des Grundkörpers 16 ist eine Aufnahme 20 ausgebildet.

Aufbau und Funktion des Befestigungselementes 10 werden anhand der nachfolgenden Figuren noch näher erläutert.

In der Figur 1 wird deutlich, dass das erste Bauelement 12 eine Öffnung 22 aufweist, die mit dem Rastelement 18 des Befestigungselementes 10 korrespondiert.

Die Aufnahme 20 bildet einen Einschubbereich 24 für einen korrespondierend ausgebildeten Abschnitt 26 des zweiten Bauelementes 14 aus. Der Abschnitt 26 kann integraler Bestandteil des zweiten Bauelementes 14 sein oder ist an diesem zusätzlich zur Verbindung mit dem Befestigungselement 10 angeordnet.

Die in Figur 1 dargestellte Anordnung zeigt folgende Funktion:
Das Befestigungselement 10 wird mit seinem Rastelement 18 in die Öffnung 22 des ersten Bauelementes 12 eingesteckt. Hierbei werden die Federschenkel 28 des Rastelementes 18 zunächst zusammengedrückt, so dass das Rastelement 18 die Öffnung 22 passieren kann. Nachdem die Federschenkel 28 die Öffnung 22 durchdrungen haben, spreizen diese aufgrund der ihnen innewohnenden Elastizität wieder auf und fixieren das Befestigungselement 10 an dem ersten Bauelement 12. Hierdurch ergibt sich eine erste Montagerichtung Y.

Zwischen dem Befestigungselement 10 und dem ersten Bauelement 12 kann ein hier angedeutetes Dichtungselement 30, welches beispielsweise aus einem elastischen Material, insbesondere aus einem Schaumstoffmaterial, besteht, angeordnet sein. Das Dichtungselement 30 weist ebenfalls eine Öffnung 32 auf, durch die das Rastelement 18 durchgreift.

In der Endposition der ersten Montagerichtung Y ist das Dichtungselement 30 zwischen dem Grundkörper 16 des Befestigungselementes 10 und einer Oberseite 34 des ersten Bauelementes 12 angeordnet. Die Federschenkel 28 liegen an einer Unterseite 36 des ersten Bauelementes 12 an.

Das Befestigungselement 10 und das erste Bauelement 12 sind in der ersten Montagerichtung Y somit fixiert. Über hier im Einzelnen nicht näher zu betrachtende Maßnahmen kann diese Fixierung zwischen Befestigungselement 10 und erstem Bauelement 12 auch wieder aufgehoben werden, indem die Federschenkel 28 an der Unterseite 36 des ersten Bauelementes 12 zusammengedrückt werden und so das Befestigungselement 10 entgegen der ersten Montagerichtung Y vom ersten Bauelement 12 entfernt wird. Die erste Montagerichtung Y ist durch einen Doppelpfeil 38 gekennzeichnet.

Das Befestigungselement 10 ist somit in alle drei Raumrichtungen verdrehsicher am ersten Bauelement 12 gelagert.

Zum lösbaren Verbinden des zweiten Bauelementes 14 mit dem Befestigungselement 10 wird das zweite Bauelement 14 mit seinem Abschnitt 26 in den Einschubbereich 24 der Aufnahme 20 hineingeschoben. Der Abschnitt 26 und der Einschubbereich 24 besitzen korrespondierende Formmerkmale - auf die anhand der nachfolgenden Figuren noch näher eingegangen wird - so dass sich eine Führung für das zweite Bauelement 14 in der ersten Montagerichtung Y, in einer zweiten Montagerichtung X und einer dritten Montagerichtung Z ergibt.

Bei bestimmungsgemäßer Endposition des Abschnitts 26 in dem Einschubbereich 24 erfolgt eine Rastverbindung zwischen der Aufnahme 20 und dem Abschnitt 26 und somit dem zweiten Bauelement 14, so dass eine Fixierung des zweiten Bauelementes 14 zu dem Befestigungselement 10 und somit zum ersten Bauelement 12 erfolgt. Diese Fixierung ist lösbar ausgebildet, so dass das zweite Bauelement 14 auch entgegen der zweiten Montagerichtung X vom Befestigungselement 10 gelöst werden kann. Dies ist durch den Doppelpfeil 40 angedeutet. Die dritte Montagerichtung Z ist durch den Doppelpfeil 42 angedeutet.

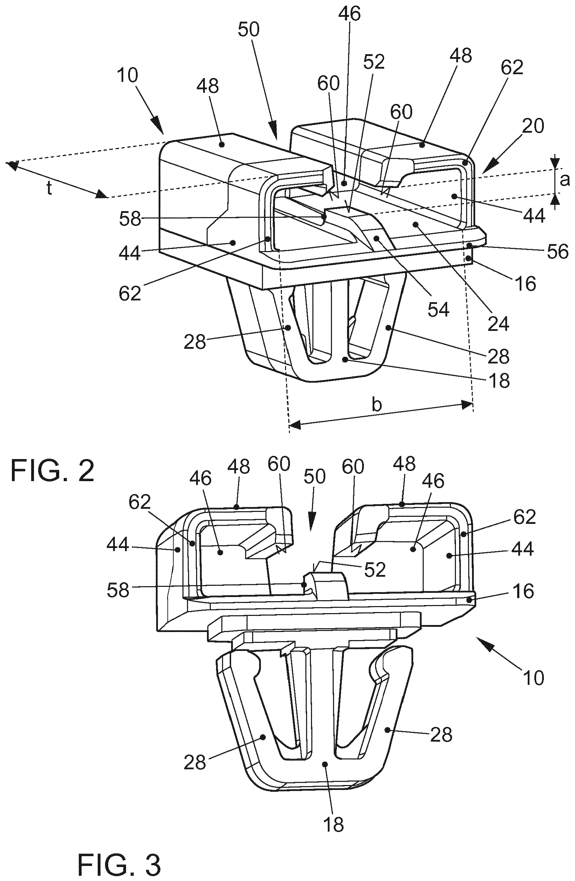

Anhand der nachfolgenden Figuren 2, 3 und 4 wird der Aufbau des Befestigungselementes 10 verdeutlicht.

Gleiche Teile wie in Figur 1 sind mit gleichen Bezugszeichen versehen und nicht nochmals erläutert.

Anhand der Figur 2 wird deutlich, dass die Aufnahme 20 von seitlichen Begrenzungswänden 44, Rückwänden 46 sowie oberen Abschlusswänden 48 gebildet wird. Die Begrenzungswände 44, Rückwände 46 und Abschlusswände 48 sind einstückig mit dem Befestigungselement 10 ausgebildet.

Hierdurch kommt es zur Ausbildung des Einschubbereiches 24 zwischen dem Grundkörper 16, den Begrenzungswänden 44, Rückwänden 46 und den Abschlusswänden 48.

Zwischen den Rückwänden 46 und den Abschlusswänden 48 ist ein durchgehender Spalt 50 ausgebildet.

Auf der dem Einschubbereich 24 zugewandten Seite des Grundkörpers 16 ist eine Auflagefläche 52 ausgebildet, die über eine Rampe 54 in eine vordere Abschlusskante 56 des Grundkörpers 16 übergeht. In Richtung der Rückwände 46 geht die Auflagefläche 52 über eine Stufe 58 der Auflagefläche 52 auf die Oberseite des Grundkörpers 16 über. Die Rampe 54 und die Auflagefläche 52 sind im Bereich des Spaltes 50 angeordnet.

Die Abschlusswände 48 bilden an ihren dem Spalt 50 und dem Einschubbereich 24 zugewandten Längskanten Anlageflächen 60 aus. Zwischen der Auflagefläche 52 und den Anlageflächen 60 besteht ein Abstand a.

Die seitlichen Begrenzungswände 44 bilden Anschlagflächen 62 aus. Die Innenseiten der Begrenzungswände 44 sind in einem Abstand b voneinander angeordnet.

Zwischen der Innenseite der Rückwände 46 und den Anschlagflächen 62 besitzt der Einschubbereich eine Tiefe t.

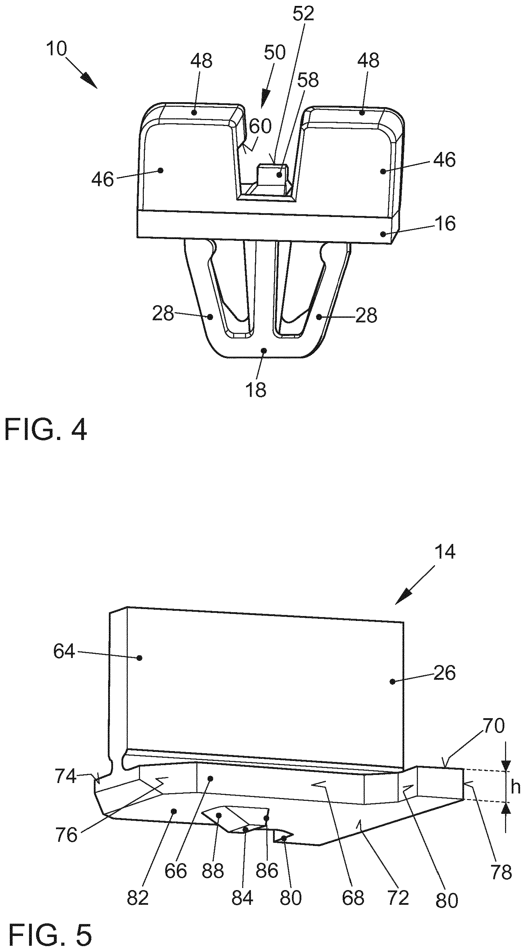

In den Figuren 3 und 4 ist das Befestigungselement 10 aus verschiedenen Perspektiven gezeigt, wobei gleiche Teile wiederum mit gleichem Bezugszeichen versehen und nicht nochmals zu erläutert sind.

Insbesondere in Figur 4 wird deutlich, wie die Auflagefläche 52 in die Stufe 58 übergeht. Auch wird die Ausbildung des Spaltes 50 zwischen den Rückwänden 46 und den Abschlusswänden 48 deutlich. Der Spalt 50 kann im Bereich der Rückwände 46 auch geschlossen sein. Hierdurch erhöht sich eine Steifigkeit des Befestigungselementes 10 und eine Größe der erforderlichen Demontagekraft ist beeinflussbar.

In Figur 5 ist in einer schematischen Perspektivansicht der Abschnitt 26 des zweiten Bauelementes 14 dargestellt.

Es wird deutlich, dass der Abschnitt 26 einen Führungsbereich 64 und einen Arretierungsbereich 66 aufweist. Der Arretierungsbereich 66 besitzt seitliche Führungsflächen 68 sowie eine obere Anlagefläche 70 und eine untere Anlagefläche 72. Der Abstand der Anlageflächen 70 und 72 zueinander bestimmt eine Höhe h des Arretierungsbereiches 66.

Die Führungsflächen 68 gehen an einer ersten Stirnfläche 74 über Auflaufflächen 76 in die Stirnfläche 74 über. Das heißt, der Arretierungsbereich 66 verjüngt sich in Richtung der Stirnfläche 74.

An der der Stirnfläche 74 gegenüberliegenden Stirnfläche 78 des Arretierungsbereiches 66 sind Anschlagflächen 80 ausgebildet.

Von einer Unterseite 82 des Arretierungsbereiches 66 erstreckt sich ein nasenartiger Vorsprung 84, der in Richtung der Stirnfläche 78 über eine Stufe 86 des Vorsprungs 84 und in Richtung der Stirnfläche 74 über eine Schräge 88 in die Unterseite 82 und somit in die Anlagefläche 72 übergeht.

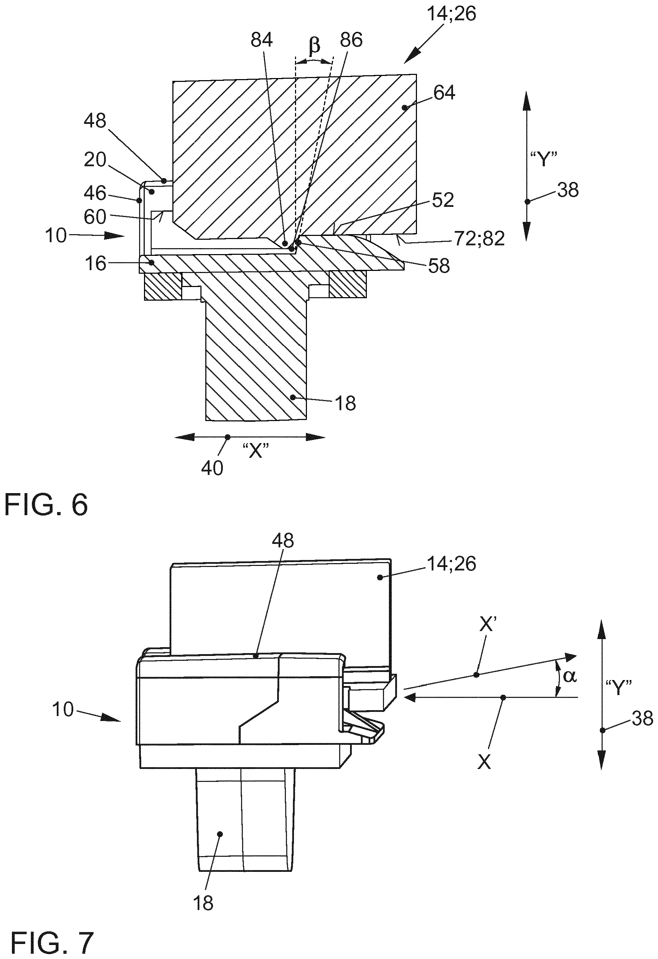

Das Zusammenwirken des Abschnittes 26 des zweiten Bauelementes 14 mit der Aufnahme 20 des Befestigungselementes 10 wird anhand der Figur 6 näher erläutert. Figur 6 zeigt eine Schnittdarstellung durch ein mittels des Befestigungselementes 10 fixiertes zweites Bauelement 14.

Der Abschnitt 26 wird mit seinem Führungsbereich 64 in den Spalt 50 der Aufnahme 20 in der zweiten Montagerichtung X eingeschoben. Die Führungsflächen 68 des Arretierungsbereiches 66 gelangen hierbei in Anlagekontakt mit den seitlichen Begrenzungswänden 44. Der Abstand b der Begrenzungswände 44 entspricht hierbei der Breite des Arretierungsbereiches 66, so dass ein definiertes Einschieben des Abschnittes 26 in die Aufnahme 20 in der zweiten Montagerichtung X möglich ist. Gleichzeitig ergibt sich hierdurch eine Positionierung des zweiten Bauelementes 14 in der dritten Montagerichtung Z. Diese läuft in der Ansicht in Figur 6 in die Papierebene hinein.

Die Höhe h des Arretierungsbereiches 66 ist geringfügig größer als der Abstand a der Auflagefläche 52 zu den Anlageflächen 60. Hierdurch wird erreicht, dass beim Einschieben des Abschnittes 26 in die Aufnahme 20 die oberen Abschlusswände 48 des Befestigungselementes 10 geringfügig in der ersten Montagerichtung Y verdrängt werden.

Der Abschnitt 26 wird so weit in die Aufnahme 20 eingeschoben, bis die Stufe 86 des Vorsprunges 84 mit der Stufe 58 der Auflagefläche 52 verrastet. In dieser Position drängen die oberen Abschlussflächen 48 mit ihren Anlageflächen 60 aufgrund der dem Material des Befestigungselementes 10 innewohnenden Elastizität in Richtung der Anlagefläche 70 des Arretierungsbereiches 66. Der Abschnitt 26 und somit das zweite Bauelement 14 ist somit sicher in der ersten Montagerichtung Y fixiert.

In dem Moment, wo die Stufe 86 des Vorsprunges 84 die Stufe 58 der Auflagefläche 52 hinterrastet, schlägt die Anschlagfläche 80 des Arretierungsbereiches 66 an die Anschlagflächen 62 der Aufnahme 20 an. Der Abschnitt 26 und somit das zweite Bauelement 14 ist sicher in der zweiten Montagerichtung X fixiert. Es wird eine definierte Position des zweiten Bauelementes 14 in Bezug auf das Befestigungselement 10 und somit über dieses auch in Bezug auf das erste Bauelement 12 eingenommen.

Wie in der Schnittdarstellung in Figur 6 zu entnehmen ist, verlaufen die Stufen 86 und 58 unter einem Winkel β zur ersten Montagerichtung Y. Die Größe des Winkels β bestimmt die Haltekraft des Befestigungselementes 10 in Bezug auf das zweite Bauelement 14. Je kleiner der Winkel β, umso höher die Haltekraft. Der Winkel β beträgt beispielsweise 1 - 3 °.

In Figur 7 ist ein mit dem Befestigungselement 10 montiertes zweites Bauelement 14 gezeigt. Die Einzelheiten sind in der Figur 7 nicht mit Bezugszeichen versehen, da diese anhand der vorherigen Figuren bereits nachvollziehbar sind.

Anhand der Figur 7 wird verdeutlicht, dass das zweite Bauelement 14 in der zweiten Montagerichtung X in das Befestigungselement 10 eingeschoben wird. Hierbei werden die Abschlusswände 48 mit den Anlagenflächen 60 elastisch federnd leicht aufgebogen.

Zwischen dem zweiten Bauelement 14 und dem Befestigungselement 10 besteht eine lösbare Fixierung.

Zum Lösen, das heißt Demontieren des zweiten Bauelementes 14 aus dem Befestigungselement 10, wird dieses um einen Demontagewinkel α in der ersten Montagerichtung Y verschwenkt. Hierbei muss die Haltekraft, die durch den Winkel β bestimmt wird, überwunden werden. Das zweite Bauelement 14 wird soweit in der ersten Montagerichtung Y verschwenkt, bis die Stufen 86 und 58 außer Eingriff gelangen. Sobald dies erfolgt ist, kann das zweite Bauelement 14 in der Demontagerichtung X' aus der Aufnahme 20 des Befestigungselementes 10 herausgeführt werden.

Der Demontagewinkel α bestimmt die Demontagekraft. Je größer der Winkel α ist, umso kleiner wirkt die Demontagekraft.

Bei dem zweiten Bauelement 14 kann es sich beispielsweise um eine Fahrzeugleuchte 94, insbesondere eine Rückleuchte eines Fahrzeuges 90, handeln. Bei dem ersten Bauelement 12 handelt es sich beispielsweise um einen Karosserieabschnitt einer Fahrzeugkarosserie 92.

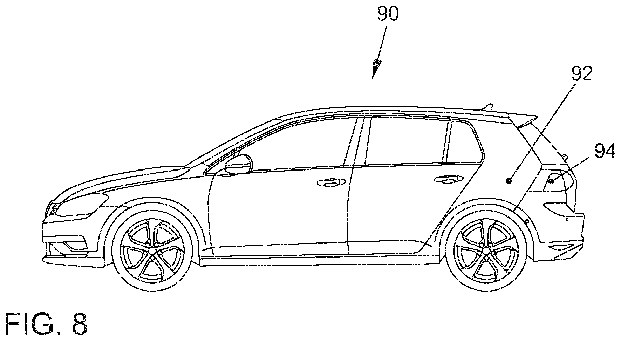

In Figur 8 ist hierzu ein Fahrzeug 90 gezeigt. An einer Fahrzeugkarosserie 92 ist eine Fahrzeugleuchte 94 (hier eine Rückleuchte) angeordnet.

Durch das Befestigungselement 10 wird somit eine lösbare Fixierung der Fahrzeugleuchte 94 bei gleichzeitiger definierter Ausrichtung in X-Richtung, Y-Richtung und Z-Richtung an der Fahrzeugkarosserie 92 möglich. Somit können Spaltbildungen zwischen der Fahrzeugleuchte 94 und der Fahrzeugkarosserie 92 verhindert beziehungsweise minimiert werden. Durch Vorsehen des Dichtungselementes 30, über das das Befestigungselement 10 am ersten Bauelement 12, also beispielsweise der Fahrzeugkarosserie 92 anliegt, kann auch eine dichte Anordnung der Fahrzeugleuchte 94 an der Fahrzeugkarosserie 92 realisiert werden.

### Bezugszeichenliste

- 10: Befestigungselement
- 12: erstes Bauelement
- 14: zweites Bauelement
- 16: Grundkörper
- 18: Rastelement

- 20: Aufnahme
- 22: Öffnung
- 24: Einschubbereich
- 26: Abschnitt
- 28: Federschenkel

- 30: Dichtungselement
- 32: Öffnung
- 34: Oberseite
- 36: Unterseite
- 38: Doppelpfeil

- 40: Doppelpfeil
- 42: Doppelpfeil
- 44: Begrenzungswände
- 46: Rückwände
- 48: Abschlusswände

- 50: Spalt
- 52: Auflagefläche
- 54: Rampe
- 56: Abschlusskante
- 58: Stufe
- 60: Anlagefläche
- 62: Anschlagflächen
- 64: Führungsbereich
- 66: Arretierungsbereich
- 68: Führungsfläche

- 70: Anlagefläche
- 72: Anlagefläche
- 74: Stirnfläche
- 76: Auflauffläche
- 78: Stirnfläche

- 80: Anschlagfläche
- 82: Unterseite
- 84: Vorsprung
- 86: Stufe
- 88: Schräge

- 90: Fahrzeug
- 92: Fahrzeugkarosserie
- 94: Fahrzeugleuchte

- a: Abstand
- b: Abstand
- h: Höhe
- t: Tiefe

- α: Demontagewinkel
- β: Winkel

- X: zweite Montagerichtung
- Y: erste Montagerichtung
- Z: dritte Montagerichtung
- X': Demontagerichtung

## Patentansprüche

1. Anordnung eines Befestigungselementes (10) zum lösbaren Verbinden von zwei Bauelementen (12, 14), welches einen Grundkörper (16) umfasst, der zumindest ein Rastelement (18) zum Verbinden mit einem ersten Bauelement (12) aufweist, wobei das Rastelement (18) in eine korrespondierende Öffnung (22) des ersten Bauelementes (12) in einer ersten Montagerichtung (Y) einbringbar ist, wobei der Grundkörper (16) an seiner dem Rastelement (18) gegenüberliegenden Seite eine Aufnahme (20) für zumindest einen Abschnitt (26) eines zweiten Bauelementes (14) aufweist, wobei die Aufnahme (20) und der Abschnitt (26) korrespondierende Formmerkmale aufweisen, die eine Führung des zweiten Bauelementes (14) in der ersten Montagerichtung (Y), in einer zweiten Montagerichtung (X) und einer dritten Montagerichtung (Z) übernehmen und die Aufnahme (20) und das zweite Bauelement (14) korrespondierende Rastmittel aufweisen, die einer lösbaren Fixierung des zweiten Bauelementes (14) in der zweiten Montagerichtung (X) dienen, wobei die Aufnahme (20) einen Einschubbereich (24) für den Abschnitt (26) des zweiten Bauelementes (14) in der Montagerichtung (X) ausbildet, **dadurch gekennzeichnet, dass**
• auf der dem Einschubbereich (24) zugewandten Seite des Grundkörpers (16) eine Auflagefläche (52) ausgebildet ist, die über eine Rampe (54) in eine vordere Abschlusskante (56) des Grundkörpers (16) übergeht, wobei die Rampe (54) und die Auflagefläche (52) im Bereich eines Spaltes (50) angeordnet sind, der durch Rückwände (46) und obere Abschlusswände (48) des Befestigungselements (10) zur Aufnahme eines Führungsbereiches (64) des Abschnittes (26) des zweiten Bauelementes (14) gebildet ist,
• wobei eine Stufe (86) eines Vorsprunges (84) des zweiten Bauelementes (14) im Zusammenwirken des Abschnittes (26) des zweiten Bauelementes (14) mit der Aufnahme (20) des Befestigungselementes (10) eine Stufe (58) der Auflagefläche (52) des Grundkörpers (16) hinterrastet und eine Anschlagfläche (80) eines Arretierungsbereiches (66) des Abschnittes (26) an Anschlagflächen (62) der Aufnahme (20) anschlägt.

2. Anordnung nach Anspruch 1, **dadurch gekennzeichnet, dass** der Einschubbereich (24) von seitlichen Begrenzungswänden (44), den Rückwänden (46) und den oberen Abschlusswänden (48) gebildet ist.

3. Anordnung nach Anspruch 2, **dadurch gekennzeichnet, dass** innerhalb des Einschubbereiches (24) die Auflagefläche (52) und Anlageflächen (60) für Anlageflächen (70, 72) des Arretierungsbereiches (66) des Abschnittes (26) ausgebildet sind.

4. Anordnung nach Anspruch 3, **dadurch gekennzeichnet, dass** ein Abstand (a) zwischen der Auflagefläche (52) und den Anlageflächen (60) kleiner ist als eine Höhe (h) des Arretierungsbereiches (66).

5. Anordnung nach den Ansprüchen 3 und 4, **dadurch gekennzeichnet, dass** der Arretierungsbereich (66) an seiner der Auflagefläche (52) zugeordneten Anlagefläche (72) einen Vorsprung (84) aufweist, der über die Stufe (86) in die Anlagefläche (72) übergeht.

6. Anordnung nach Anspruch 1, **dadurch gekennzeichnet, dass** die Stufen (58, 86) unter einem Winkel (β) zur ersten Montagerichtung (Y) verlaufen.

7. Anordnung nach Anspruch 1, **dadurch gekennzeichnet, dass** die Anschlagfläche (80) des Arretierungsbereiches (66) an die Anschlagflächen (62) der Aufnahme (20) anschlägt, wenn die Stufe (86) des Vorsprunges (84) des zweiten Bauelementes (14) im Zusammenwirken des Abschnittes (26) des zweiten Bauelementes (14) mit der Aufnahme (20) des Befestigungselementes (10) die Stufe (58) der Auflagefläche (52) hinterrastet.

8. Anordnung nach einem der Ansprüche 1 bis 7, **dadurch gekennzeichnet,**
**dass** die oberen Abschlusswände (48) des Befestigungselementes (10) elastisch ausgebildet sind, wobei das zweite Bauelement (14) zur Demontage in Demontagerichtung (X`) aus dem Befestigungselement (10) um einen Demontagewinkel (α) in der ersten Montagerichtung (Y) unter Überwindung der Haltekraft, die durch einen Winkel (ß) zwischen den Stufen (58, 86) und der ersten Montagerichtung (Y) bestimmt wird, verschwenkbar ist, da die oberen Abschlusswände (48) elastisch ausgebildet sind.

9. Anordnung nach Anspruch 1, **dadurch gekennzeichnet, dass** das erste Bauelement (12) ein Karosserieabschnitt einer Fahrzeugkarosserie (92) und das zweite Bauelement (14) eine Fahrzeugleuchte (94) ist.

## Claims

1. Arrangement of a fastening element (10) for releasably connecting two components (12, 14), the fastening element comprising a basic body (16) which has at least one latching element (18) for connecting to a first component (12), wherein the latching element (18) can be introduced in a first installation direction (Y) into a corresponding opening (22) in the first component (12), wherein the basic body (16) has, on its side opposite the latching element (18), a receptacle (20) for at least one portion (26) of a second component (14), wherein the receptacle (20) and the portion (26) have corresponding shaped features which take on guiding of the second component (14) in the first installation direction (Y), in a second installation direction (X) and a third installation direction (Z), and the receptacle (20) and the second component (14) have corresponding latching means which serve for releasably fixing the second component (14) in the second installation direction (X), wherein the receptacle (20) forms an insertion region (24) for the portion (26) of the second component (14) in the installation direction (X), **characterized in that**
• a supporting surface (52) is formed on that side of the basic body (16) which faces the insertion region (24), the supporting surface merging via a ramp (54) into a front end edge (56) of the basic body (16), wherein the ramp (54) and the supporting surface (52) are arranged in the region of a gap (50) which is formed by rear walls (46) and upper end walls (48) of the fastening element (10) for receiving a guide region (64) of the portion (26) of the second component (14),
• wherein a step (86) of a protrusion (84) of the second component (14) in interaction with the portion (26) of the second component (14) having the receptacle (20) of the fastening element (10) latches behind the step (58) of the supporting surface (52) of the basic body (16), and a stop surface (80) of a locking region (66) of the portion (26) strikes against stop surfaces (62) of the receptacle (20).

2. Arrangement according to Claim 1, **characterized in that** the insertion region (24) is formed by lateral boundary walls (44), the rear walls (46) and the upper end walls (48).

3. Arrangement according to Claim 2, **characterized in that** the supporting surface (52) and contact surfaces (60) for contact surfaces (70, 72) of the locking region (66) of the portion (26) are formed within the insertion region (24).

4. Arrangement according to Claim 3, **characterized in that** a distance (a) between the supporting surface (52) and the contact surfaces (60) is smaller than a height (h) of the locking region (66).

5. Arrangement according to Claims 3 and 4, **characterized in that** the locking region (66) has, on its contact surface (72) assigned to the supporting surface (52), a protrusion (84) which merges via the step (86) into the contact surface (72).

6. Arrangement according to Claim 1, **characterized in that** the steps (58, 86) run at an angle (β) with respect to the first installation direction (Y).

7. Arrangement according to Claim 1, **characterized in that** the stop surface (80) of the locking region (66) strikes against the stop surfaces (62) of the receptacle (20) when the step (86) of the protrusion (84) of the second component (14) in interaction with the portion (26) of the second component (14) having the receptacle (20) of the fastening element (10) latches behind the step (58) of the supporting surface (52).

8. Arrangement according to one of Claims 1 to 7, **characterized in that** the upper end walls (48) of the fastening element (10) are elastic, wherein, for the removal in the removal direction (X') from the fastening element (10), the second component (14) can be pivoted by a removal angle (α) in the first installation direction (Y) by overcoming the retaining force, which is determined by an angle (β) between the steps (58, 86) and the first installation direction (Y), since the upper end walls (48) are elastic.

9. Arrangement according to Claim 1, **characterized in that** the first component (12) is a body portion of a vehicle body (92) and the second component (14) is a vehicle light (94).

## Revendications

1. Agencement d'un élément de fixation (10) pour l'assemblage séparable de deux composants (12, 14), comprenant un corps de base (16) qui présente au moins un élément à encliquetage (18) servant à l'assemblage à un premier composant (12), l'élément à encliquetage (18) étant apte à être introduit dans une ouverture correspondante (22) du premier composant (12) dans une première direction de montage (Y), le corps de base (16) présentant, sur son côté opposé à l'élément à encliquetage (18), un logement (20) pour au moins une portion (26) d'un deuxième composant (14), le logement (20) et la portion (26) présentant des caractéristiques de forme correspondantes qui assurent un guidage du deuxième composant (14) dans la première direction de montage (Y), dans une deuxième direction de montage (X) et dans une troisième direction de montage (Z), et le logement (20) et le deuxième composant (14) présentant des moyens d'encliquetage correspondants, qui servent à une fixation séparable du deuxième composant (14) dans la deuxième direction de montage (X), le logement (20) formant une zone d'insertion (24) pour la portion (26) du deuxième composant (14) dans la direction de montage (X), **caractérisé en ce que**
• sur le côté du corps de base (16) tourné vers la zone d'insertion (24) est formée une surface d'appui (52) qui se prolonge par une rampe (54) jusqu'en une arête d'appui avant (56) du corps de base (16), la rampe (54) et la surface d'appui (52) étant disposées dans la zone d'une fente (50) qui est formée par des parois arrière (46) et des parois terminales supérieures (48) de l'élément de fixation (10) pour recevoir une zone de guidage (64) de la portion (26) du deuxième composant (14),
• un cran (86) d'une saillie (84) du deuxième composant (14) s'enclenchant derrière un cran (58) de la surface d'appui (52) du corps de base (16) en coopération de la portion (26) du deuxième composant (14) avec le logement (20) de l'élément de fixation (10), et une surface de butée (80) d'une zone d'arrêt (66) de la portion (26) venant en butée contre des surfaces de butée (62) du logement (20).

2. Agencement selon la revendication 1, **caractérisé en ce que** la zone d'insertion (24) est formée par des parois de délimitation latérales (44), les parois arrière (46) et les parois terminales supérieures (48).

3. Agencement selon la revendication 2, **caractérisé en ce que** la surface d'appui (52) et les surfaces de contact (60) pour les surfaces de contact (70, 72) de la zone d'arrêt (66) de la portion (26) sont formées à l'intérieur de la zone d'insertion (24).

4. Agencement selon la revendication 3, **caractérisé en ce qu'**une distance (a) entre la surface d'appui (52) et les surfaces de contact (60) est inférieure à une hauteur (h) de la zone d'arrêt (66).

5. Agencement selon les revendications 3 et 4, **caractérisé en ce que** la zone d'arrêt (66) présente, sur sa surface de contact (72) associée à la surface d'appui (52), une saillie (84) qui fait saillie de la surface de contact (72) par le cran (86).

6. Agencement selon la revendication 1, **caractérisé en ce que** les crans (58, 86) s'étendent selon un angle (β) par rapport à la première direction de montage (Y).

7. Agencement selon la revendication 1, **caractérisé en ce que** la surface de butée (80) de la zone d'arrêt (66) vient en butée contre les surfaces de butée (62) du logement (20) lorsque le cran (86) de la saillie (84) du deuxième composant (14) vient s'encliqueter derrière le cran (58) de la surface d'appui (52) en coopération avec la portion (26) du deuxième composant (14) et le logement (20) de l'élément de fixation (10).

8. Agencement selon l'une des revendications 1 à 7, **caractérisé en ce que** les parois terminales supérieures (48) de l'élément de fixation (10) sont élastiques, le deuxième composant (14) étant déplacé pour le démontage dans la direction de démontage (X) de l'élément de fixation (10) d'un angle de démontage (α) dans la première direction de montage (Y) en surmontant la force de retenue, qui est déterminée par un angle (β) entre les crans (58, 86) et la première direction de montage (Y), étant donné que les parois terminales supérieures (48) sont réalisées de manière élastique.

9. Agencement selon la revendication 1, **caractérisé en ce que** le premier composant (12) est une partie de carrosserie d'une carrosserie de véhicule (92) et le deuxième composant (14) est un feu de véhicule (94).
